# EUROPÄISCHE PATENTSCHRIFT

(11) **EP 0 750 660 B1**
(45) Veröffentlichungstag und Bekanntmachung des Hinweises auf die Patenterteilung: **27.05.1998**
(21) Anmeldenummer: 95911298.8
(22) Anmeldetag: 06.03.1995
(51) Int. Cl.: C11D 3/37, C11D 3/00, C11D 11/00

(54) **VERFAHREN ZUR HERSTELLUNG SCHMUTZLÖSENDER GRANULATE**
PROCESS FOR PRODUCING DIRT-LOOSENING GRANULATES
PROCEDE DE FABRICATION DE GRANULES ELIMINANT LES SALISSURES

(30) Priorität: 14.03.1994 DE 4408360
(43) Veröffentlichungstag der Anmeldung: 02.01.1997
(73) Patentinhaber: Henkel Kommanditgesellschaft auf Aktien, 40191 Düsseldorf (DE)
(72) Erfinder: GREGER, Manfred, D-40559 Düsseldorf (DE); JACOBS, Jochen, D-42349 Wuppertal (DE); KÜHNE, Norbert, D-42781 Haan (DE); SCHAMBIL, Fred, D-40789 Monheim (DE); ASSMANN, Georg, D-41363 Jüchen (DE); BAUER, Volker, D-40589 Düsseldorf (DE); MARSCHNER, Michael, D-41470 Neuss (DE); KERGL, Max-Peter, D-40723 Hilden (DE); MEINE, Georg, D-40822 Mettmann (DE); JUNG, Dieter, D-40723 Hilden (DE)
(86) Internationale Anmeldenummer: EP9500818
(87) Internationale Veröffentlichungsnummer: WO9525158

(56) Entgegenhaltungen:
- DE-A- 2 200 911
- DE-A- 3 324 258
- GB-A- 1 437 076
- US-A- 4 020 015
- US-A- 4 569 772

## Beschreibung

Die Erfindung betrifft ein Verfahren zur Herstellung von schütt- und rieselfähigen granularen Waschmittelbestandteilen, welche ein schmutzablösevermögendes Polymer und ein feinteiliges Trägermaterial enthalten, und die Verwendung derartiger Granulate zur Herstellung fester Wasch- und Reinigungsmittel.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, welche der Wäschefaser schmutzabstoßende Eigenschaften verleihen und die, falls während des Waschvorgangs anwesend, das Schmutzablösevermögen der übrigen Waschmittelbestandteile unterstützen. Gleiches gilt sinngemäß auch für Reinigungsmittel für harte Oberflächen. Derartige schmutzablösevermögende Substanzen werden oft als "Soil-Release"-Wirkstoffe bezeichnet. Wegen ihrer chemischen Ähnlichkeit zu Polyesterfasern besonders wirksame schmutzablösevermögende Wirkstoffe, die aber auch bei Geweben aus anderem Material die erwünschte Wirkung zeigen können, sind Copolyester, die Dicarbonsäureeinheiten, Alkylenglykoleinheiten und Polyalkylenglykoleinheiten enthalten. Schmutzablösevermögende Copolyester der genannten Art wie auch ihr Einsatz in Waschmitteln sind seit langer Zeit bekannt.

So beschreibt zum Beispiel die deutsche Offenlegungsschrift DT 16 17 141 ein Waschverfahren unter Einsatz von Polyethylenterephthalat-Polyoxyethylenglykol-Copolymeren. Die deutsche Offenlegungsschrift DT 22 00 911 betrifft Waschmittel, die Niotensid und ein Mischpolymer aus Polyoxyethylenglykol und Polyethylenterephthalat enthalten. In der deutschen Offenlegungsschrift DT 22 53 063 sind saure Textilausrüstungsmittel genannt, die ein Copolymer aus einer dibasigen Carbonsäure und einem Alkylen- oder Cycloalkylenpolyglykol sowie gegebenenfalls einem Alkylen- oder Cycloalkylenglykol enthalten. Das europäische EP 066 944 betrifft Textilbehandlungsmittel, die einen Copolyester aus Ethylenglykol, Polyethylenglykol, aromatischer Dicarbonsäure und sulfonierter aromatischer Dicarbonsäure in bestimmten Molverhältnissen enthalten. Aus dem europäischen Patent EP 185 427 sind Methyl- oder Ethylgruppen-endverschlossene Polyester mit Ethylen-und/oder Propylen-terephthalat- und Polyethylenoxid-terephthalat-Einheiten und Waschmitel, die derartiges Soil-release-Polymer enthalten, bekannt. Das europäische Patent EP 241 984 betrifft einen Polyester, der neben Oxyethylen-Gruppen und Terephthalsäureeinheiten auch substituierte Ethyleneinheiten sowie Glycerineinheiten enthält.

Bei bekannt guter Wirksamkeit der genannten Verbindungen beziehungsweise Verbindungsklassen weisen die in der Regel bei Raumtemperatur festen Substanzen jedoch Nachteile bezüglich ihrer Einarbeitbarkeit in feste Wasch- oder Reinigungsmittel auf. Ein bevorzugtes Herstellverfahren für derartige Mittel besteht in der Sprühtrocknung einer wäßrigen Aufschlämmung ihrer Bestandteile. Die Mitversprühung der genannten schmutzablösevermögenden Substanzen und ihre vorhergehende Einarbeitung in die wäßrige Aufschlämmung verbietet sich in der Regel wegen der Alkalität dieser Aufschlämmung, bei der die genannten schmutzablösevermögenden Substanzen wegen ihrer Esterfunktionen normalerweise nicht ausreichend stabil sind. Deswegen ist zum Beispiel in der US-amerikanischen Patentschrift US 4 569 772 vorgeschlagen worden, eine Schmelze der schmutzablösevermögenden Verbindung, die dort zusätzlich durch Polyacrylat stabilisiert wurde, sprühzukühlen oder nach dem Abkühlen zu vermahlen und die so erzeugten Partikel Waschmitteln beizumischen. Wegen der nur in geringen Mengen im fertigen Mittel erforderlichen Anteile solcher Partikel bereitet das homogene Einmischen in feste Waschmittel jedoch Schwierigkeiten. In der deutschen Offenlegungsschrift DE 33 24 258 wird daher vorgeschlagen, eine Lösung beziehungsweise Dispersion von schmutzablösevermögendem Wirkstoff in nichtionischem Tensid auf ein builderhaltiges Waschmittelteilchen aufzusprühen. Bei dieser Vorgehensweise gelangt man zu Mitteln, welche in jedem Fall nichtionisches Tensid enthalten müssen, was die Rezepturfreiheit einschränkt. Überdies besteht die Gefahr des Zusammenklebens der besprühten Teilchen durch das an ihrer Oberfläche befindliche, einen niedrigen Schmelzpunkt aufweisende nichtionische Tensid.

Gegenstand der Erfindung, mit der diese Nachteile vermieden werden sollen, ist ein Verfahren zur Herstellung von schütt- und rieselfähigen granularen Waschmittelbestandteilen, die ein schmutzablösevermögendes Polymer und ein feinteiliges Trägermaterial enthalten, das dadurch gekennzeichnet ist, daß man ein bei Raumtemperatur festes schmutzablösevermögendes Polymer, welches Ethylenterephthalat- und Polyoxyethylenterephthalat-Gruppen enthält, auf eine Temperatur erwärmt, bei der es eine Viskosität unter 5000 mPas aufweist und die tensidfreie Polymerschmelze auf das feinteilige Trägermaterial in einem verdichtenden Mischer bei einer Mischungstemperatur, die mindestens so hoch wie die Erweichungstemperatur des Polymers ist, oder auf eine Wirbelschicht des Trägermaterials bei einer Mischungstemperatur, die höchstens so hoch wie die Erweichungstemperatur des Polymers ist, aufbringt.

In der Regel ist es möglich, ein im erfindungsgemäßen Verfahren einzusetzendes Polymer auf eine Temperatur, beispielsweise 150 °C, zu erwärmen, bei der es sehr dünnflüssig wird, beispielsweise eine Viskosität von nur 5 mPas bis 10 mPas aufweist. Vorzugsweise wird das Polymer auf eine solche Temperatur erwärmt, bei der es eine Viskosität im Bereich von 10 mPas bis 4500 mPas, insbesondere von 50 mPas bis 2000 mPas, aufweist. Normalerweise werden diese Viskositätsbereiche bei Temperaturen von höchstens etwa 100 °C, insbesondere etwa 50 °C über der Erweichungstemperatur des Polymers erreicht. Die Viskosität kann nach üblichen Methoden, beispielsweise mit Hilfe eines schubspannungskontrollierten Plattenviskosimeters oder eines Rotationsviskosimeters (Schergeschwindigkeit 10 s⁻¹ bis 100 s⁻¹) ermittelt werden.

Die Erweichungstemperatur des Polymers, die nach bekannten Methoden, beispielsweise mittels DSC bestimmt werden kann, liegt vorzugsweise im Bereich von 40 °C bis 80 °C. Vorzugsweise besitzen die Polymere Molmassen im Bereich von 600 bis 100 000. Im erfindungsgemäßen Verfahren werden vorzugsweise solche schmutzablösevermögende Polymere eingesetzt, die Ethylenterephthalat- und Polyoxyethylenterephthalat-Gruppen in Molverhältnissen von 9:1 bis 1:9 enthalten. Andere Monomereinheiten, beispielsweise Propylenglykol, Polypropylenglykol, Alkylen- oder Alkenylendicarbonsäuren, Isophthalsäure, carboxy- oder sulfosubstituierte Phthalsäureisomere können im schmutzablösevermögenden Polymer enthalten sein. Auch endgruppenverschlossene Derivate, das heißt Polymere, die weder freie Hydroxylgruppen noch freie Carboxylgruppen aufweisen, sondern beispielsweise C₁₋₄-Alkylgruppen tragen oder mit einbasigen Carbonsäuren, beispielsweise Benzoesäure oder Sulfobenzoesäure, endständig verestert sind, können im erfindungsgemäßen Verfahren eingesetzt werden. Geeignet sind auch die aus EP 241 985 bekannten Polyester, die neben Oxyethylen-Gruppen und Terephthalsäureeinheiten 1,2-Propylen-, 1,2-Butylen- und/oder 3-Methoxy-1,2-propylengruppen sowie Glycerineinheiten enthalten und mit C₁- bis C₄-Alkylgruppen endgruppenverschlossen sind, die in EP 253 567 eingesetzten Soil-release-Polymere mit einer Molmasse von 900 bis 9000 aus Ethylenterephthalat und Polyethylenoxid-terephthalat, wobei die Polyethylenglykol-Einheiten Molgewichte von 300 bis 3000 aufweisen und das Molverhältnis von Ethylenterephthalat zu Polyethylenoxid-terephthalat 0,6 bis 0,95 beträgt, die aus EP 272 033 bekannten, zumindest anteilig durch C₁₋₄-Alkyl- oder Acylreste endgruppenverschlossenen Polyester mit Poly-propylenterephthalat- und Polyoxyethylenterephthalat-Einheiten, die in EP 274 907 genannten sulfoethyl-endgruppenverschlossenen terephthalathaltigen Soil-release-Polyester, die durch Sulfonierung ungesättigter Endgruppen hergestellten Soil-Release-Polyester mit Terephthalat-, Alkylenglykol- und Poly-C₂₋₄-Glylkol-Einheiten der EP 357 280, die aus EP 398 133 bekannten kationischen Soil-release-Polyester mit Amin-, Ammonium- und/oder Aminoxid-Gruppen und die kationischen Soil-release-Polyester mit ethoxylierten, quaternierten Morpholin-Einheiten der EP 398 137. Gleichfalls geeignet sind Polymere aus Ethylenterephthalat und Polyethylenoxid-terephthalat, in denen die Polyethylenglykol-Einheiten Molgewichte von 750 bis 5000 aufweisen und das Molverhältnis von Ethylenterephthalat zu Polyethylenoxid-terephthalat 50:50 bis 90:10 beträgt und deren Einsatz in Waschmitteln in der deutschen Patentschrift DE 28 57 292 beschrieben ist, sowie Polymere mit Molgewicht 15 000 bis 50 000 aus Ethylenterephthalat und Polyethylenoxid-terephthalat, wobei die Polyethylenglykol-Einheiten Molgewichte von 1000 bis 10 000 aufweisen und das Molverhältnis von Ethylenterephthalat zu Polyethylenoxid-terephthalat 2:1 bis 6:1 beträgt, die gemäß DE 33 24 258 in Waschmitteln eingesetzt werden können.

Das schmutzablösevermögende Polymer kann in Abmischung mit geringen Mengen weiterer Substanzen, zum Beispiel Gewebeweichmachern, Silikonen, Oxidationsinhibitoren und/oder Verfärbungsinhibitoren, im erfindungsgemäßen Verfahren aufgebracht werden, wobei wesentlich ist, daß die Beimischungen bei der gewünschten Verfahrenstemperatur die Viskosität der dann vorliegenden Mischung nicht über den oben angegebenen Grenzwert erhöhen. Die Beimischungen sind daher bei der Temperatur, auf die das Polymer vor dem Versprühen gebracht wird, entweder flüssig oder homogen im schmutzablösevermögenden Polymer gelöst. Ihr Anteil, bezogen auf die Mischung, beträgt vorzugsweise nicht mehr als 10 Gew.-%.

Als Träger kommen sehr feinpulvrige Materialien mit Durchmessern im Mikrometerbereich, beispielsweise Zeolithe in Waschmittelqualität, insbesondere Zeolith-A und/oder Zeolith-P, aber auch grobere Materialien mit Durchmessern bis in den Millimeterbereich, beispielsweise sprühgetrocknete Waschmittel beziehungsweise Waschmittel vorprodukte, in Betracht. Vorzugsweise werden Trägermaterialien mit einem mittleren Korndurchmesser im Bereich von 2 µm bis 1,5 mm, insbesondere von 3 µm bis 10 µm oder von 0,1 mm bis 1 mm, eingesetzt. Die Natur des Trägermaterials ist nicht kritisch, sofern es bei der Mischungstemperatur stabil ist. Vorzugsweise werden Substanzen eingesetzt, die übliche Inhaltsstoffe von Wasch- und Reinigungsmitteln sind. In Frage kommen insbesondere Alkalisulfate, Alkalicarbonate, Alkalihydrogencarbonate, Kieselsäure, Alkalisilikate, die amorph oder kristallin vorliegen können, und Alkalialumosilikate, die ebenfalls amorph oder kristallin vorliegen können, aber auch organische Substanzen, wie Alkalicitrate, und deren Mischungen. Zu den bevorzugten feinteiligen Trägermaterialien gehören synthetische, insbesondere röntgenamorphe Kieselsäuren, da bei deren Einsatz besonders große Mengen, das heißt über 60 Gew.-% bezogen auf entstehendes Granulat, an schmutzablösevermögendem Polymer aufgebracht werden können und man ein besonders einheitliches, feines Kornspektrum des entstehenden Granulats erhält. Synthetische Kieselsäuren werden in verschiedene Gruppen eingeteilt, die sich durch die unterschiedlichen Herstellverfahren ergeben. Man unterscheidet sogenannte thermische oder pyrogene Kieselsäuren von den Kieselsäuren nach Naßverfahren, wobei die ersteren nach dem Verfahren der Flammenhydrolyse oder nach dem Lichtbogenverfahren, die letzteren nach dem Fällungsverfahren, dem Gelverfahren oder dem Hydrothermalverfahren hergestellt werden können. Besonders bevorzugt sind Fällungskieselsäuren, beispielsweise die Handelsprodukte Sident^{(R)} 12, Sident^{(R)} 12 DS, FK 160, FK 300 DS, FK 310, FK 320, FK 320 DS, FK 383 DS, FK 500 LS, FK 700, Sipernat^{(R)} 22, Sipernat^{(R)} 22 S, Sipernat^{(R)} 30, Sipernat^{(R)} 50, Sipernat^{(R)} 50 S, Ultrasil^{(R)} VN 2, Ultrasil^{(R)} VN 3, Wessalon^{(R)} und Wessalon^{(R)} S der Firma Degussa. Derartige Kieselsäuren können in einer Variation des erfindungsgemäßen Verfahrens auch zum Abpudern des Granulats aus feinteiligem Trägermaterial und Polymer verwendet werden, wobei der Anteil des Abpuderungsmittels, bezogen auf entstehendes abgepudertes Granulat, in der Größenordnung von etwa 1 Gew.-% bis etwa 10 Gew.-%, beispielsweise etwa 4 Gew.-%, liegt.

Eine bevorzugte Ausführungsform des erfindungsgemäßen Verfahrens wird unter Einsatz eines verdichtenden Mischers, insbesondere eines schnelldrehenden Mischers, zu denen zum Beispiel Lödige^{(R)}- oder Drais^{(R)}-Mischer gehören, bei einer Mischungstemperatur, welche 5 °C bis 30 °C über der Erweichungstemperatur des Polymers liegt, insbesondere einer Mischungstemperatur im Bereich von 40 °C bis 70 °C, insbesondere von 45 °C bis 70 °C, durchgeführt, wobei man ohne weiteres Granulate mit einem Schüttgewicht im Bereich von 650 g/l bis 900 g/l erhält. Bei dieser Verfahrensvariante ist es möglich, daß das schmutzablösevermögende Polymer zumindest anteilsweise in das körnige Trägermaterial eindringt und sich normalerweise nicht vollständig an der Oberfläche des entstehenden Granulats befindet.

In einer weiteren bevorzugten Ausführungsform des erfindungsgemäßen Verfahrens erzeugt man in einer dafür geeigneten Vorrichtung eine Wirbelschicht des feinteiligen Trägermaterials und sprüht das erwärmte und geschmolzene Polymer auf dieses auf, wobei durch geeignete Kühlungsmaßnahmen, im einfachsten Fall durch Einsatz von Kaltluft als Trägergas für die Wirbelschicht, die Mischungstemperatur auf höchstens die Erweichungstemperatur des Polymers eingestellt wird. Vorzugsweise liegt dabei die Mischungstemperatur 40 °C bis 2 °C unterhalb der Erweichungstemperatur des Polymers, insbesondere bei 10 °C bis 60 °C. Bei dieser Verfahrensvariante wird ein schnelles Abkühlen und Erstarren des Polymer-Trägermaterial-Gemisches bewirkt, so daß in der Regel ein grobkörnigeres Produkt mit dem Polymer überwiegend an der Oberfläche entsteht, welches gewünschtenfalls gemahlen werden kann. Normalerweise beträgt die Schüttdichte des so hergestellten Granulats etwa 350 g/l bis 600 g/l.

Durch das erfindungsgemäße Verfahren gelingt es problemlos, riesel- und schüttfähige, nicht klebende Granulate mit hohem Gehalt an schmutzablösevermögendem Polymer herzustellen. Bezogen auf entstehendes Granulat bringt man vorzugsweise 15 Gew.-% bis 75 Gew.-%, insbesondere 20 Gew.-% bis 60 Gew.-% und besonders bevorzugt 30 Gew.-% bis 60 Gew.-% Polymerschmelze auf das Trägermaterial auf.

Das durch das erfindungsgemäße Verfahren hergestellte Granulat wird zur Herstellung fester, insbesondere pulverförmiger, aber auch tablettenförmiger Wasch- und Reinigungsmittel verwendet. Im einfachsten Fall wird es den übrigen als Pulver vorliegenden Komponenten zugemischt, kann aber auch in Abmischung mit diesen in bekannter Weise nachverdichtet beziehungsweise extrudiert werden.

### Beispiele

### Beispiel 1

Ein schmutzablösevermögendes Ethylenterephthalat-Polyoxyethylenterephthalat-Polymer (Velvetol^{(R)} 251C, Hersteller Rhone-Poulenc) wurde auf ca. 105 °C erwärmt und auf ein in einem Lödige^{(R)}-Mischer mit eingeschaltetem Zerhacker vorgelegtes sprühgetrocknetes Na-Alumosilikat (Wessalith^{(R)} P, Hersteller Degussa) aufgebracht. Man erhielt ein frei rieselfähiges feinkörniges Granulat (Schüttdichte 660 g/l), das einen Polymergehalt von 33 Gew.-% besaß.

### Beispiel 2

Eine Wirbelschicht aus Natriumcarbonat-Partikeln (durch Kaltluft in Bewegung gehalten) wurde mit dem in Beispiel 1 verwendeten Polymer besprüht. Das Trägermaterial und das Polymer wurden ständig der Anlage zugeführt und über ein Fallrohr wurden die gebildeten Granulate (Polymergehalt ca. 50 Gew.-%) abgezogen. Das schütt- und rieselfähige Granulat besaß ein Schüttgewicht von ca. 450 g/l.

## Patentansprüche

1. Verfahren zur Herstellung von schütt- und rieselfähigen granularen Waschmittelbestandteilen, welche ein schmutzablösevermögendes Polymer und ein feinteiliges Trägermaterial enthalten, dadurch gekennzeichnet, daß man ein bei Raumtemperatur festes schmutzablösevermögendes Polymer, welches Ethylenterephthalat- und Polyoxyethylenterephthalat-Gruppen enthält, auf eine Temperatur erwärmt, bei welcher es eine Viskosität unter 5000 mPas aufweist und die Polymerschmelze auf das feinteilige Trägermaterial in einem verdichtenden Mischer bei einer Mischungstemperatur, die mindestens so hoch wie die Erweichungstemperatur des Polymers ist, oder auf eine Wirbelschicht des Trägermaterials bei einer Mischungstemperatur, die höchstens so hoch wie die Erweichungstemperatur des Polymers ist, aufbringt.

2. Verfahren nach Anspruch 1, dadurch gekennzeichnet, daß man, bezogen auf entstehendes Granulat, 15 Gew.-% bis 75 Gew.-%, insbesondere 20 Gew.-% bis 60 Gew.-% Polymerschmelze auf das Trägermaterial aufbringt.

3. Verfahren nach Anspruch 1 oder 2, dadurch gekennzeichnet, daß man das Polymer auf eine solche Temperatur erwärmt, bei der es eine Viskosität im Bereich von 10 mPas bis 4500 mPas, insbesondere von 50 mPas bis 2000 mPas, aufweist.

4. Verfahren nach einem der Ansprüche 1 bis 3, dadurch gekennzeichnet, daß man ein Polymer mit einer Molmasse im Bereich von 600 bis 100 000 einsetzt.

5. Verfahren nach einem der Ansprüche 1 bis 4, dadurch gekennzeichnet, daß man es unter Einsatz eines verdichtenden Mischers bei einer Mischungstemperatur, welche 5 °C bis 30 °C über der Erweichungstemperatur des Polymers liegt, insbesondere einer Mischungstemperatur im Bereich von 40 °C bis 70 °C, durchführt.

6. Verfahren nach Anspruch 5, dadurch gekennzeichnet, daß man einen einen Lödige®- oder Drais®-Mischer einsetzt, und Granulate mit einem Schüttgewicht im Bereich von 650 g/l bis 900 g/l erhält.

7. Verfahren nach einem der Ansprüche 1 bis 4, dadurch gekennzeichnet, daß man die Polymerschmelze auf eine Wirbelschicht des Trägermaterials bei einer Mischungstemperatur, die 40°C bis 2°C unterhalb der Erweichungstemperatur des Polymers, insbesondere bei 10 °C bis 60 °C liegt, aufbringt.

8. Verfahren nach Anspruch 7, dadurch gekennzeichnet, daß die Schüttdichte des so hergestellten Granulats etwa 350 g/l bis 600 g/l beträgt.

9. Verfahren nach einem der Ansprüche 1 bis 8, dadurch gekennzeichnet, daß man Trägermaterialien mit einem mittleren Korndurchmesser im Bereich von 2µm bis 1,5 mm, insbesondere von 3 µm bis 10 µm oder von 0,1 mm bis 1 mm, einsetzt.

10. Verfahren nach einem der Ansprüche 1 bis 9, dadurch gekennzeichnet, daß man das Trägermaterial aus der Gruppe umfassend Alkalisulfate, Alkalicarbonate, Alkalihydrogencarbonate, Kieselsäure, Alkalisilikate, die amorph oder kristallin vorliegen können, und Alkalialumosilikate, die ebenfalls amorph oder kristallin vorliegen können, aber auch organische Substanzen, wie Alkalicitrate, und deren Mischungen auswählt.

11. Verfahren nach einem der Ansprüche 1 bis 10, dadurch gekennzeichnet, daß das Trägermaterial eine synthetische, insbesondere röntgenamorphe Kieselsäure, insbesondere eine Fällungskieselsäure, ist.

12. Verwendung von schütt- und rieselfähigen granularen Waschmittelbestandteilen, welche ein schmutzablösevermögendes Polymer und ein feinteiliges Trägermaterial enthalten, erhalten nach dem Verfahren gemäß einem der Ansprüche 1 bis 11, zur Herstellung fester, insbesondere pulverförmiger Wasch- und Reinigungsmittel.

## Claims

1. A process for the production of pourable and free-flowing granular detergent ingredients containing a soil-release polymer and a particulate carrier material, characterized in that a soil-release polymer which is solid at room temperature and which contains ethylene terephthalate and polyoxyethylene terephthalate groups is heated to a temperature at which it has a viscosity below 5,000 mPas and the polymer melt is applied to the particulate carrier material in a compacting mixer at a mixing temperature which is at least as high as the softening temperature of the polymer or to a fluidized bed of the carrier material at a mixing temperature which is at most as high as the softening temperature of the polymer.

2. A process as claimed in claim 1, characterized in that 15% by weight to 75% by weight and more particularly 20% by weight to 60% by weight, based on the granules formed, of polymer melt is applied to the carrier material.

3. A process as claimed in claim 1 or 2, characterized in that the polymer is heated to a temperature at which it has a viscosity in the range from 10 mPas to 4,500 mPas and more particularly in the range from 50 mPas to 2,000 mPas.

4. A process as claimed in any of claims 1 to 3, characterized in that a polymer having a molecular weight in the range from 600 to 100,000 is used.

5. A process as claimed in any of claims 1 to 4, characterized in that it is carried out using a compacting mixer at a mixing temperature 5°C to 30°C above the softening temperature of the polymer, more particularly at a mixing temperature in the range from 40°C to 70°C.

6. A process as claimed in claim 5, characterized in that a Lödige® or Drais® mixer is used and granules with a bulk density of 650 g/l to 900 g/l are obtained.

7. A process as claimed in any of claims 1 to 4, characterized in that the polymer melt is applied to a fluidized bed of the carrier material at a mixing temperature 40°C to 2°C below the softening temperature of the polymer, more particularly at a mixing temperature in the range from 10°C to 60°C.

8. A process as claimed in claim 7, characterized in that the granules thus produced have a bulk density of about 350 g/l to 600 g/l.

9. A process as claimed in any of claims 1 to 8, characterized in that carrier materials having a mean particle diameter of 2 pm to 1.5 mm and more particularly in the range from 3 µm to 10 µm or from 0.1 mm to 1 mm are used.

10. A process as claimed in any of claims 1 to 9, characterized in that the carrier material is selected from the group consisting of alkali metal sulfates, alkali metal carbonates, alkali metal hydrogen carbonates, silica, amorphous or crystalline alkali metal silicates, amorphous or crystalline alkali metal alumosilicates and organic substances, such as alkali metal citrates, and mixtures thereof.

11. A process as claimed in any of claims 1 to 10, characterized in that the carrier material is a synthetic, more particularly X-ray amorphous, silica, more particularly a precipitated silica.

12. The use of pourable and free-flowing detergent ingredients containing a soil-release polymer and a particulate carrier material obtained by the process claimed in any of claims 1 to 11 for the production of solid, more particularly powder-form, detergents.

## Revendications

1. Procédé de fabrication de composants d'agents de lavage granulaires aptes au déversement et à l'écoulement, qui contiennent un polymère pouvant éliminer les salissures et un matériau porteur finement réparti,
caractérisé en ce qu'
on chauffe un polymère pouvant éliminer les salissures, solide à température ambiante, qui contient des groupes de téréphtalate d'éthylène et de polytéréphtalate d'oxyde d'éthylène, à une température, dans laquelle il comporte une viscosité inférieure à 5000 mPa.s et on applique le produit de fusion du polymère sur le matériau porteur finement divisé dans un mélangeur de compactage à une température de mélange, qui est au moins aussi élevée que la température de ramollissement du polymère, ou sur une couche fluidisée du matériau porteur à une température de mélange, qui est au plus aussi élevée que la température de ramollissement du polymère.

2. Procédé selon la revendication 1,
caractérisé en ce qu'
on applique, par rapport au granulat résultant, de 15 % en poids à 75 % en poids, en particulier de 20 % en poids à 60 % en poids de produit de fusion du polymère sur le matériau porteur.

3. Procédé selon la revendication 1 ou 2,
caractérisé en ce qu'
on chauffe le polymère à une température telle, qu'il comporte une viscosité dans l'intervalle de 10 mPa.s à 4500 mPa.s, en particulier de 50 mPa.s à 2000 mPa.s.

4. Procédé selon une des revendications 1 à 4,
caractérisé en ce qu'
on utilise un polymère ayant une masse molaire dans l'intervalle de 600 à 100.000.

5. Procédé selon une des revendications 1 à 4,
caractérisé en ce qu'
on le réalise en utilisant un mélangeur qui comporte à une température du mélange, qui se situe de 5°C à 30°C au-dessus de la température de ramollissement du polymère, en particulier à une température du mélange dans l'intervalle de 40°C à 70°C.

6. Procédé selon la revendication 5,
caractérisé en ce qu'
on utilise un mélangeur Lödige^{(R)} ou Drais^{(R)} et on obtient des granulats ayant une densité apparente dans l'intervalle de 650 g/l à 900 g/l.

7. Procédé selon une des revendications 1 à 4,
caractérisé en ce qu'
on applique le produit de fusion du polymère sur une couche fluidisée du matériau porteur à une température du mélange, qui se situe 40°C à 2°C en dessous de la température de ramollissement du polymère, en particulier de 10°C à 60°C.

8. Procédé selon la revendication 7,
caractérisé en ce que
la densité apparente du granulat ainsi produit se monte à environ 350 g/l jusqu'à 600 g/l.

9. Procédé selon une des revendications 1 à 8,
caractérisé en ce qu'
on utilise des matériaux porteurs ayant un diamètre de grain moyen dans l'intervalle de 2 µm à 1,5 mm, en particulier de 3 µm à 10 µm ou de 0,1 mm à 1 mm.

10. Procédé selon une des revendications 1 à 9,
caractérisé en ce qu'
on choisit le matériau porteur dans le groupe comprenant des sulfates alcalins, des carbonates alcalins, des hydrocarbonates alcalins, de l'acide silicique, des silicates alcalins, qui peuvent être présents à l'état amorphe ou cristallin, mais aussi des substances organiques, comme des citrates alcalins, et leurs mélanges.

11. Procédé selon une des revendications 1 à 10,
caractérisé en ce que
le matériau porteur est un acide silicique synthétique, particulièrement amorphe aux rayons X, en particulier un acide silicique de précipitation.

12. Utilisation de composants granulaires aptes au déversement et à l'écoulement, qui contiennent un polymère pouvant éliminer des salissures et un matériau porteur finement divisé, obtenus selon le procédé conformément à une des revendications 1 à 11, destinés à fabriquer des produits de lavage et de nettoyage solides, en particulier pulvérulents.
